# FASCICULE DE BREVET EUROPEEN

(11) **EP 0 502 785 B1**
(45) Date de publication et mention de la délivrance du brevet: **16.02.1994**
(21) Numéro de dépôt: 92400560.6
(22) Date de dépôt: 04.03.1992
(51) Int. Cl.: B24B 9/14, B24B 17/02, B23Q 33/00

(54) **Procédé pour une lecture de forme d'un quelconque article déformable élastiquement, en particulier pour la lecture de contour d'un cercle ou entourage d'une monture de lunettes**
Verfahren zum Abtasten der Form eines beliebigen, elastisch verformbaren Artikels, insbesondere zum Abtasten einer Brillengestellsöffnung
Method for scanning the shape of any resilient deformable article, especially for scanning the inside peripheral shape of a spectacle frame

(30) Priorité: 07.03.1991 FR 9102717
(43) Date de publication de la demande: 09.09.1992
(73) Titulaire: ESSILOR INTERNATIONAL Compagnie Générale d'Optique, F-94028 Créteil Cédex (FR)
(72) Inventeur: Chansavoir, Alain, F-77138 Luzancy (FR)
(74) Mandataire: CABINET BONNET-THIRION

(56) Documents cités:
- EP-A- 0 291 378
- EP-A- 0 386 251
- FR-A- 2 270 631

## Description

La présente invention concerne d'une manière générale les lectures de forme.

Elle vise plus particulièrement le cas où, pour une telle lecture de forme, on met en oeuvre un palpeur de contact destiné à suivre la forme à lire, en appliquant ce palpeur de contact à l'article concerné et en relevant ses coordonnées à l'instant correspondant.

C'est le cas, notamment, dans la demande de brevet européen EP-A-0 291 378, qui vise plus précisément la lecture du contour des cercles ou entourages d'une monture de lunettes.

Tous les appareils de lecture de contour à palpeur de contact connus à ce jour ont pour inconvénient que, l'application du palpeur de contact à l'article concerné devant inévitablement se faire avec une certaine force, cette application provoque tout aussi inévitablement une déformation locale de cet article lorsqu'il s'agit d'un article déformable, comme cela est précisément le cas le plus souvent des cercles ou entourages d'une monture de lunettes, notamment lorsque ces cercles ou entourages sont relativement fins et souples.

Il en résulte dès lors une certaine inexactitude pour la lecture de contour effectuée.

S'agissant, de surcroît, de la lecture du contour des cercles ou entourages d'une monture de lunettes, les moyens nécessairement mis en oeuvre pour assurer une tenue suffisante de cette monture de lunettes pour éviter qu'elle ne bouge ne manquent pas de provoquer de manière intempestive une déformation préalable de ces cercles ou entourages lorsque, comme cela est le cas le plus fréquent, ils contrebutent latéralement ces derniers.

La lecture de contour s'en trouve également faussée.

Pour éviter ces difficultés, il a été proposé des appareils de lecture de forme qui, procédant soit de manière optique soit de manière pneumatique, ne mettent en oeuvre aucun palpeur de contact.

C'est le cas, par exemple, dans la demande de brevet européen EP-A-0 226 349 et c'est le cas, également, dans le brevet allemand DE-C-3 814 697.

Sans qu'il soit nécessaire de rentrer dans le détail de leur réalisation, il suffira d'indiquer que les appareils de lecture de forme correspondants présentent par eux-mêmes une complexité intrinsèque non négligeable.

Ils sont donc relativement coûteux.

En outre, la focalisation de leur point de lecture est parfois douteuse, au détriment de l'exactitude recherchée.

Il est connu par ailleurs, et c'est le cas dans la demande de brevet européen EP-A-0 291 378 déjà mentionnée ci-dessus, de maîtriser de manière précise la force suivant laquelle, dans un appareil de lecture de contact à palpeur de contact, ce palpeur de contact est appliqué à l'article dont la forme est à lire.

La présente invention a d'une manière générale pour objet de tirer profit de cette possibilité, en prenant son parti de la déformation induite, parce que, le plus souvent, et notamment dans le cas des cercles ou entourages des montures de lunettes les plus courantes, cette déformation reste en pratique dans le domaine élastique lorsque, comme en l'espèce, la force d'application correspondante reste relativement faible.

De manière plus précise, elle a pour objet un procédé propre à permettre une lecture de forme d'un quelconque article déformable élastiquement, et en particulier une lecture de contour d'un cercle ou entourage de monture de lunettes, ce procédé étant du genre suivant lequel, mettant en oeuvre un palpeur de contact destiné à suivre la forme à lire, on applique ce palpeur de contact à l'article concerné avec une force de valeur déterminée susceptible d'entraîner une déformation locale de cet article et on relève les coordonnées du palpeur de contact à l'instant correspondant, et étant d'une manière générale caractérisé en ce que on procède systématiquement à deux relevés de coordonnées successifs, l'un pour une première valeur de consigne de la force d'application du palpeur de contact différente de zéro, l'autre pour une deuxième valeur de consigne de cette force d'application également différente de zéro mais différente aussi de la précédente, et en ce que on déduit mathématiquement des deux relevés de coordonnées ainsi effectués les coordonnées correspondant à une valeur de consigne de la force d'application du palpeur de contact égale à zéro.

En pratique, du fait du caractère élastique des déformations imprimées à l'article concerné par le palpeur de contact assurant la lecture de forme de celui-ci, le calcul à effectuer est relativement simple et rapide.

Il peut si désiré être aisément réalisé par un calculateur intégré à l'appareil de lecture de forme correspondant.

Quoi qu'il en soit, tout se passe comme si, suivant l'invention, il était procédé, de manière virtuelle, sous force nulle, et donc sans déformation, à la lecture de forme recherchée, alors même qu'il est mis en oeuvre un palpeur de contact pour cette lecture de forme.

Autrement dit, il est possible, suivant l'invention, de s'affranchir totalement de la déformation intrinsèque effectivement induite par un palpeur de contact lors d'une lecture de forme mettant en oeuvre un tel palpeur de contact.

Dès lors, s'agissant par exemple de la lecture de contour d'un cercle ou entourage de monture de lunettes, il est avantageusement possible de se satisfaire, pour la tenue de la monture de lunettes concernée, de moyens de maintien relativement simples et peu onéreux, et par exemple de moyens de maintien intervenant par pincement sur son pont nasal médian.

Ainsi, toute déformation préalable des cercles ou entourages dont le contour est à lire est avantageusement évitée.

Les caractéristiques et avantages de l'invention ressortiront d'ailleurs de la description qui va suivre, à titre d'exemple, en référence aux dessins schématiques annexés sur lesquels :
la figure 1 est une vue en plan illustrant le procédé suivant l'invention ;
la figure 2 reprend, à échelle supérieure, le détail de la figure 1 repéré par un encart II sur cette figure 1 ;
la figure 3 est, à échelle différente, une vue en coupe effectuée suivant la ligne III-III de la figure 1 ;
la figure 4 est un diagramme illustratif du calcul à effectuer.

Ces figures illustrent, à titre d'exemple, l'application de l'invention à la lecture du contour d'un quelconque des cercles ou entourages 10 d'une quelconque monture de lunettes 11.

De manière connue en soi, il est procédé à cette lecture de contour en mettant en oeuvre un palpeur de contact 12 destiné à suivre le contour à lire.

Les dispositions correspondantes, qui sont par exemple du type de celles décrites dans la demande de brevet européen EP-A-0 291 378, sont bien connues par elles-mêmes, et, ne relevant pas de la présente invention, elles ne seront pas décrites en détail ici.

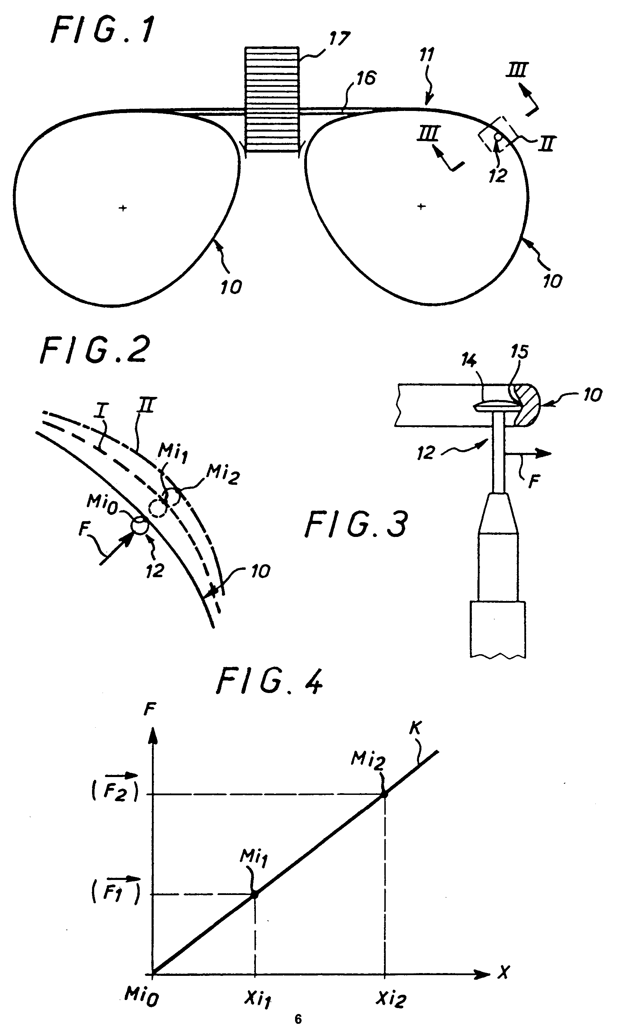

Il suffira d'indiquer que, en pratique, et tel qu'illustré par une flèche F sur les figures 2 et 3, la tête 14 du palpeur de contact 12 ainsi mis en oeuvre est appliquée avec une force F déterminée sur le fond du drageoir 15 du cercle ou entourage 10 dont le contour est à lire, et qu'on relève les coordonnées du palpeur de contact 12 à l'instant correspondant, c'est-à-dire au moment de cette application.

De l'application sous force F du palpeur de contact 12 au cercle ou entourage 10 il résulte inévitablement une déformation locale de ce cercle ou entourage 10.

Par hypothèse, cette déformation locale reste dans les limites du domaine d'élasticité du cercle ou entourage 10.

Autrement dit, il ne s'agit pas d'une déformation permanente.

Suivant l'invention, on procède systématiquement à deux relevés de coordonnées successifs, l'un, Xi1Yi1 pour une première valeur de consigne F1 de la force d'application F du palpeur de contact 12 différente de zéro, l'autre, Xi2Yi2, pour une deuxième valeur de consigne F2 de cette force d'application F également différente de zéro mais différente aussi de la précédente, et on déduit mathématiquement des deux relevés de coordonnées ainsi effectués les coordonnées correspondant à une valeur de consigne F0 de la force d'application F du palpeur de contact 12 égale à zéro.

Compte tenu de ce qui précède, et tel que schématisé par des traits interrompus I et II sur la figure 2, le cercle ou entourage 10 se déforme localement lors de chacun de ces deux relevés de coordonnées.

Soit Mi0 la position initiale de celui de ses points, supposé quelconque, auquel est appliqué le palpeur de contact 12, Mi1 la position de ce même point lors du premier relevé de coordonnées, et Mi2 sa position lors du second.

Soit Xi0Yi0 les coordonnées du point Mi0.

Par définition, il s'agit des coordonnées recherchées.

Suivant l'invention, elles sont déduites mathématiquement des coordonnées Xi1Yi1 du point Mi1 et Xi2Yi2 du point Mi2.

En effet, et compte tenu de l'élasticité supposée, il existe, entre les coordonnées Xi0Yi0, Xi1Yi1, Xi2Yi2 et les valeurs de consigne F0, F1, F2 correspondantes, une relation directe, qui, tel qu'illutré par le diagramme de la figure 4 relatif aux seules abscisses Xi0, Xi1, Xi2, permet de déduire linéairement des deux relevés de coordonnées effectués les coordonnées Xi0Yi0 recherchées.

En pratique, la pente K de la droite représentative de cette relation est proportionnelle à la raideur du cercle ou entourage 10 au point Mi0 considéré.

En pratique, également, pour que les déformations correspondantes se fassent effectivement élastiquement, il suffit que les valeurs de consigne F1, F2 de la force d'application F lors des deux relevés de coordonnées effectués soient inférieures à une valeur donnée, et, par exemple, soient inférieures à 1.962 N (200 gF).

Préférentiellement, pour simplifier les opérations, on choisira pour valeurs de consigne F1, F2 des valeurs de consigne qui sont entre elles dans un rapport entier.

Par exemple, la valeur de consigne F1 est égale à 0.49 N (50 gF), et la valeur de consigne F2 à 0.98 N (100 gF).

Bien entendu, dans ce qui précède, ces valeurs de consigne F1, F2 sont appréciées en valeurs absolues.

Bien entendu, également, l'invention ne se limite pas à la forme de mise en oeuvre décrite et représentée, mais englobe toute variante d'exécution.

Dans tous les cas, et de manière avantageuse, les moyens à mettre en oeuvre pour la tenue de la monture de lunettes 11 concernée peuvent agir par exemple par simple pincement sur le pont nasal médian 16 de celle-ci, tel que hachuré en 17 sur la figure 1.

Il va de soi, enfin, que l'application de l'invention ne se limite pas à la seule lecture de contour d'un cercle ou entourage d'une monture de lunettes mais s'étend au contraire d'une manière plus générale à toute lecture de forme de tout quelconque article déformable élastiquement.

## Revendications

1. Procédé pour une lecture de forme d'un quelconque article déformable élastiquement, du genre suivant lequel, mettant en oeuvre un palpeur de contact (12) destiné à suivre la forme à lire, on applique ledit palpeur de contact (12) à l'article (10) concerné avec une force (F) de valeur déterminée susceptible d'entraîner une déformation locale de cet article (10) et on relève les coordonnées du palpeur de contact (12) à l'instant correspondant, caractérisé en ce que on procède systématiquement à deux relevés de coordonnées successifs, l'un pour une première valeur de consigne (F1) de la force d'application (F) du palpeur de contact (12) différente de zéro, l'autre pour une deuxième valeur de consigne (F2) de cette force d'application (F), également différente de zéro mais différente aussi de la précédente consigne (F2), et en ce que on déduit mathématiquement des deux relevés de coordonnées ainsi effectués les coordonnées (Xi0Yi0) correspondant à une valeur de consigne (F0) de la force d'application (F) du palpeur de contact (12) égale à zéro.

2. Procédé suivant la revendication 1, caractérisé en ce que on choisit pour valeurs de consigne (F1, F2) de la force d'application (F) du palpeur de contact (12) différentes de zéro des valeurs qui sont entre elles dans un rapport entier.

3. Procédé suivant l'une quelconque des revendications 1, 2, caractérisé en ce que on choisit pour valeurs de consigne (F1, F2) de la force d'application (F) du palpeur de contact (12) différentes de zéro des valeurs inférieures à 1.96 N (200 gF).

4. Procédé suivant la revendication 3, caractérisé en ce que on choisit pour l'une des valeurs de consigne (F1, F2) de la force d'application (F) du palpeur de contact (12) différentes de zéro une valeur égale à 0.49 N (50 gF).

5. Procédé suivant la revendication 3, caractérisé en ce que on choisit pour l'une des valeurs de consigne (F1, F2) de la force d'application (F) du palpeur de contact (12) différentes de zéro une valeur égale à 0.98 N (100 gF).

## Patentansprüche

1. Verfahren zum Abtasten einer Form irgendeines elastisch verformbaren Artikels,derart, daß man einen Kontaktfühler (12) zum Folgen der abzutastenden Form einsetzt, und man diesen Kontaktfühler (12) auf den betreffenden Artikel (10) mit einer Kraft (F) von bestimmtem Wert aufsetzt, die fähig ist, eine örtliche Verformung dieses Artikels (10) hervorzurufen, und man die Koordinaten des Kontaktfühlers (12) in dem entsprechenden Augenblick ermittelt, dadurch gekennzeichnet, daß man systematisch zwei aufeinanderfolgende Ermittlungen von Koordinaten vornimmt, und zwar die eine für einen ersten Einstellwert (F1) der Kraft des Aufsetzens (F) des Kontaktfühlers (12), der von Null abweicht, und die andere für einen zweiten Einstellwert (F2) dieser Kraft des Aufsetzens (F), der ebenfalls von Null, aber auch von dem vorherigen Wert abweicht, und dadurch, daß man mathematisch von den zwei so durchgeführten Ermittlungen der Koordinaten die Koordinaten (Xi0Yi0) ableitet, die einem Einstellwert (FO) der Kraft des Aufsetzens (F) des Kontaktfühlers (12) gleich Null entsprechen.

2. Verfahren gemäß Anspruch 1, dadurch gekennzeichnet, daß man als Einstellwerte (F1, F2) der Kraft des Aufsetzens (F) des Kontaktfühlers (12), die von Null abweichen, Werte wählt, die untereinander in einer Gesamtbeziehung stehen.

3. Verfahren gemäß irgendeinem der Ansprüche 1, 2, dadurch gekennzeichnet, daß man als Einstellwerte (F1, F2) der Kraft des Aufsetzens (F) des Kontaktfühlers (12), die von Null abweichen, Werte unterhalb von 1.96 N (200gF) wählt.

4. Verfahren gemäß Anspruch 3, dadurch gekennzeichnet, daß man für einen der Einstellwerte (F1, F2) der Kraft des Aufsetzens (F) des Kontaktfühlers (12), die von Null abweichen, einen Wert gleich 0.49 N (50gF) wählt.

5. Verfahren gemäß Anspruch 3, dadurch gekennzeichnet, daß man für einen der Einstellwerte (F1, F2) der Kraft des Aufsetzens (F) des Kontaktfühlers (12), die von Null abweichen, einen Wert gleich 0.98 N (100gF) wählt.

## Claims

1. A process for scanning the shape of any elastically deformable article, of the kind wherein, using a contact sensor (12) intended to follow the shape to be scanned, said contact sensor (12) is applied to the article (10) in question with a force (F) of a given value such as to cause local deformation of said article (10) and the co-ordinates of the contact sensor (12) are recorded at the corresponding instant, characterised by systematically effecting two successive co-ordinate recordings, one for a first reference value (F1) of the force (F) with which the contact sensor (12) is applied, that is different from zero, the other for a second reference value (F2) in respect of said application force (F), which is also different from zero but different also from the previous reference value (F1), and mathematically deducing from the two co-ordinate recordings made in that way the co-ordinates (Xi0Yi0) corresponding to a reference value (F0) of the force (F) with which the contact sensor (12) is applied, that is equal to zero.

2. A process according to claim 1 characterised in that values which are in an integral ratio between each other are selected for the reference values (F1, F2) in respect of the force (F) with which the contact sensor (12) is applied, that are different from zero.

3. A process according to either one of claims 1 and 2 characterised in that values of less than 1.96 N (200 gF) are selected for reference values (F1, F2) in respect of the force (F) with which the contact sensor (12) is applied, that are different from zero.

4. A process according to claim 3 characterised in that a value equal to 0.49 N (50 gF) is selected for one of the reference values (F1, F2) in respect of the force (F) with which the contact sensor (12) is applied, that are different from zero.

5. A process according to claim 3 characterised in that a value equal to 0.98 N (100 gF) is selected for one of the reference values (F1, F2) in respect of the force (F) with which the contact sensor (12) is applied, that are different from zero.
